# EUROPEAN PATENT APPLICATION

(11) **EP 4 717 638 A1**
(43) Date of publication of application: **01.04.2026**
(21) Application number: 25151444.4
(22) Date of filing: 13.01.2025
(51) Int. Cl.: B65H 1/04, B65H 7/02, B65H 7/14

(54) **SHEET TRANSPORT DEVICE, SHEET READING DEVICE, AND IMAGE FORMING APPARATUS**

(30) Priority: 25.09.2024 JP 2024166488
(71) Applicant: FUJIFILM Business Innovation Corp., Minato-ku Tokyo (JP)
(72) Inventor: ISHIDA, Tomomi, Yokohama-shi, Kanagawa (JP)
(74) Representative: Kurig, Thomas

(57) **Abstract**

A sheet transport device (14) includes a sheet placing unit (28) on which a sheet (12) to be transported is placed, plural first detection units (100, 101, 102, 103) that detect the sheet placed on the sheet placing unit, a second detection unit (104, 105, 106, 107) that detects the sheet placed on the sheet placing unit via a detection method different from a detection method of the first detection unit, and a plurality of support units (81, 82, 83) to which the first and second detection units are attached, in which the plurality of first detection units are attached to the same support unit that is attachable to and detachable from the sheet placing unit.

## Description

### BACKGROUND OF THE INVENTION

### (i) Field of the Invention

The present invention relates to a sheet transport device, a sheet reading device, and an image forming apparatus.

### (ii) Description of Related Art

In the related art, for example, techniques disclosed in JP1995-23153A and JP1998-10793 1A have already been proposed as a technique related to a sheet transport device.

JP1995-23153A discloses a configuration in which, in the wire bundle processing of a document reading unit of a facsimile device, the document reading unit is provided with an electrical wire bundle connected to a driving means that is a driving source for performing document transport, an electrical wire bundle connected to a reading means that reads a document image in accordance with the document transport, and a wire bundle integration means that collectively establishes mechanical or electrical connections to a control unit installed in locations other than the document reading unit.

JP1998-107931A discloses an image reading device including a scanner unit for reading an image, and an electronics unit having a box shape that is integrally provided below the scanner unit, in which a tray unit that mounts an electrical element for processing the image is provided inside the electronics unit, and the tray unit is configured to be capable of taking a storage position and a pull-out position with respect to the electronics unit.

### SUMMARY OF THE INVENTION

An object of the present invention is to improve recyclability of the sheet transport device as compared with a case where a plurality of detection units having different detection methods mounted on the sheet transport device are attached to the same support unit without considering the detection method.

According to a first aspect of the present disclosure, there is provided a sheet transport device including a sheet placing unit on which a sheet to be transported is placed, a plurality of first detection units that detect the sheet placed on the sheet placing unit, a second detection unit that detects the sheet placed on the sheet placing unit via a detection method different from a detection method of the first detection unit, and a plurality of support units to which the first and second detection units are attached, in which the plurality of first detection units are attached to the same support unit that is attachable to and detachable from the sheet placing unit.

According to a second aspect of the invention, in the sheet transport device according to the first aspect, the plurality of first detection units may be reflective type detection units disposed adjacent to each other on a downstream side along a transport direction of the sheet.

According to a third aspect of the invention, in the sheet transport device according to the second aspect, the plurality of first detection units may consist of a detection unit disposed at an end portion on the downstream side along the transport direction of the sheet and at a position shifted in a width direction intersecting the transport direction of the sheet from a center along the width direction, and a detection unit disposed on an upstream side of the end portion on the downstream side along the transport direction of the sheet and at the center along the width direction intersecting the transport direction of the sheet.

According to a fourth aspect of the invention, in the sheet transport device according to the third aspect, the plurality of first detection units may be attached to the same first support unit.

According to a fifth aspect of the invention, in the sheet transport device according to the first aspect, the second detection unit may be a transmissive type detection unit that detects a size of the sheet along a width direction intersecting a transport direction of the sheet.

According to a sixth aspect of the invention, in the sheet transport device according to the fifth aspect, the second detection unit may detect a position of a side guide that abuts an end portion in the width direction intersecting the transport direction of the sheet placed on the sheet placing unit by combining detection results of the second detection unit.

According to a seventh aspect of the invention, in the sheet transport device according to the sixth aspect, the second detection unit may be attached to the same second support unit.

According to an eighth aspect of the present disclosure, there is provided a sheet reading device including the sheet transport device according to any one of the first to seventh aspects, and a reading unit that reads information on a sheet transported by the sheet transport device.

According to a ninth aspect of the present disclosure, there is provided an image forming apparatus including the sheet reading device according to the eighth aspect, and an image forming unit that forms information on a sheet read by the sheet reading device as an image on a recording medium.

According to the first aspect of the present invention, it is possible to improve recyclability of the sheet transport device as compared with a case where a plurality of detection units having different detection methods mounted on the sheet transport device are attached to the same support unit without considering the detection method.

According to the second aspect of the present invention, the plurality of first detection units are easily disposed adjacent to each other on the downstream side along the transport direction of the sheet as compared with a case where the plurality of first detection units consist of transmission (light shielding) type detection units.

According to the third aspect of the present invention, it is possible to detect even a sheet having a size that is extremely small as compared with a case where the plurality of first detection units consist of only the detection units that are disposed at the end portion on the downstream side along the transport direction of the sheet and at the position shifted in the width direction intersecting the transport direction of the sheet from the center along the width direction.

According to the fourth aspect of the present invention, the plurality of first detection units facilitates inspections or the like during recycling, as compared with a case where the plurality of first detection units are attached to different support units.

According to the fifth aspect of the present invention, the second detection unit is capable of detecting a wide variety of sheet sizes with a small number of detection units, as compared with a case where the second detection unit consists of a reflective type detection unit that detects the sheet itself.

According to the sixth aspect of the present invention, the second detection unit is capable of detecting the position of the side guide with higher accuracy than in a case where the second detection unit consists of a reflective type detection unit that detects the position of the side guide.

According to the seventh aspect of the present invention, the second detection unit facilitates inspections or the like during recycling, as compared with a case where the second detection unit is attached to different support units.

According to the eighth aspect of the present invention, recyclability of the sheet reading device is improved as compared with a case where the sheet transport device according to any one of the first to seventh aspects is not provided.

According to the ninth aspect of the present invention, recyclability of the image forming apparatus is improved as compared with a case where the sheet reading device according to the eighth is not provided.

### BRIEF DESCRIPTION OF THE DRAWINGS

Exemplary embodiment(s) of the present invention will be described in detail based on the following figures, wherein:
Fig. 1 is an overall configuration diagram illustrating an image forming apparatus to which a sheet transport device according to a first exemplary embodiment of the present invention is applied;
Fig. 2 is a configuration diagram illustrating a document reading device to which the sheet transport device according to the first exemplary embodiment of the present invention is applied;
Fig. 3 is a plan configuration diagram illustrating disposition of a document on a platen glass;
Fig. 4 is a perspective configuration diagram illustrating the document reading device;
Fig. 5 is a perspective configuration diagram illustrating a document tray;
Figs. 6A and 6B are configuration diagrams illustrating a detection mechanism that determines a size of a document;
Fig. 7 is a diagram illustrating a table for determining a size of a document;
Fig. 8 is a block diagram illustrating a control device of the sheet transport device according to the first exemplary embodiment of the present invention;
Fig. 9 is a rear surface configuration diagram illustrating a document accommodation tray of the document reading device to which the sheet transport device according to the first exemplary embodiment of the present invention is applied;
Fig. 10 is a plan view illustrating a first support board;
Fig. 11 is a plan view illustrating a second support board;
Fig. 12 is a rear surface configuration diagram illustrating a document tray of a document reading device to which a sheet transport device according to a second exemplary embodiment of the present invention is applied; and
Fig. 13 is a rear surface configuration diagram illustrating a document tray of a document reading device to which a sheet transport device according to a third exemplary embodiment of the present invention is applied.

### DETAILED DESCRIPTION OF THE INVENTION

Hereinafter, exemplary embodiments of the present invention will be described with reference to the drawings.

### [First Exemplary Embodiment]

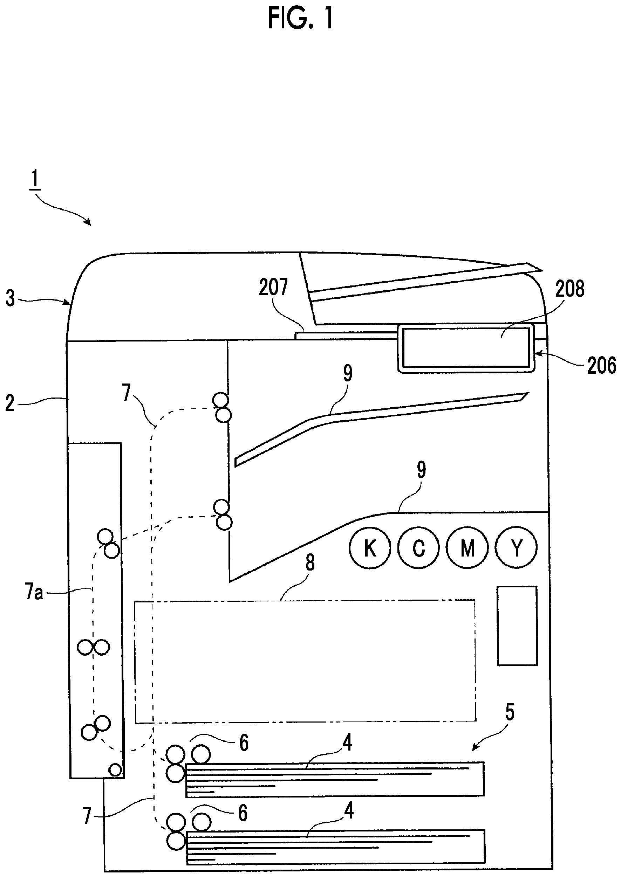

Fig. 1 is a configuration diagram illustrating an outline of an entire image forming apparatus to which a sheet transport device and a document reading device according to the first exemplary embodiment of the present invention are applied.

### <Overall Configuration of Image Forming Apparatus>

The image forming apparatus according to the first exemplary embodiment is configured as, for example, a full-color image forming apparatus that forms a full-color or monochrome image on a recording medium. The image forming apparatus includes a document reading device that reads an image of a document.

As illustrated in Fig. 1, an image forming apparatus 1 includes, in general, an apparatus main body 2, a document reading device 3, one or a plurality of paper accommodation units 5, a paper feeding unit 6, a paper transport unit 7, an image forming unit 8, and a plurality of or a single paper discharge unit 9. The apparatus main body 2 is configured as a vertically long substantially rectangular parallelepiped-shaped housing. The document reading device 3 is disposed on an upper portion of the apparatus main body 2. The paper accommodation unit 5 is disposed inside the apparatus main body 2 and accommodates recording paper 4 as an example of a recording medium. The paper feeding unit 6 feeds the recording paper 4 accommodated in the paper accommodation unit 5 one sheet at a time in a separated state. The paper transport unit 7 transports the recording paper 4 fed by the paper feeding unit 6 along a required transport path. The image forming unit 8 is an example of an image forming means that forms a full-color or monochrome image on the recording paper 4 transported by the paper transport unit 7. The paper discharge unit 9 discharges the recording paper 4 on which the image is formed by the image forming unit 8. The paper transport unit 7 includes a duplex transport unit 7a that reverses the front and back of the recording paper 4 on which the image is formed on one side (front surface), and transports the recording paper 4 to the image forming unit 8 again.

The image forming unit 8 is not particularly limited as long as the image forming unit 8 is capable of forming a full-color or monochrome image on the recording paper 4. The image forming unit 8 may, for example, use an electrophotographic method to form a full-color or monochrome image on the recording paper 4 by using toners of four colors of yellow (Y), magenta (M), cyan (C), and black (K). In addition, the image forming unit 8 may use an inkjet recording method to form a full-color or monochrome image on the recording paper 4.

### <Configuration of document reading device>

The document reading device 3 according to the first exemplary embodiment has a function as a duplex automatic document feeder (DADF) capable of automatically reading both sides of a document. As described above, the document reading device 3 is disposed, for example, on the upper portion of the apparatus main body 2 of the image forming apparatus 1. However, the document reading device 3 may be disposed separately from the image forming apparatus 1 alone or may be disposed in combination with other electronic apparatuses such as an image processing apparatus that performs graphic processing or the like.

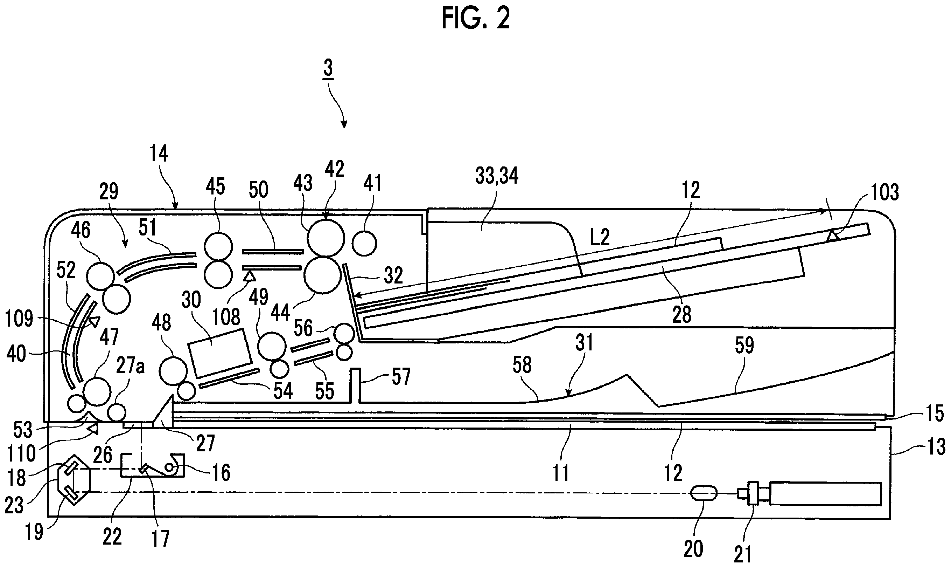

As illustrated in Fig. 2, the document reading device 3 includes a document reading device main body 13 that reads an image of a document 12 as an example of a sheet placed on a platen glass 11. An automatic document transport device 14, which is an example of a sheet transport device that automatically transports the document 12 to the reading position of the platen glass 11, is mounted on the upper portion of the document reading device main body 13. The automatic document transport device 14 also has a function as a document pressing member (platen cover) that presses the document 12 placed on the platen glass 11. The automatic document transport device 14 is attached to an upper portion of the document reading device main body 13 to be openable and closable such that the front side in the drawing opens upward around a rotation fulcrum (not illustrated) located at the back side in the drawing. As will be described later, the automatic document transport device 14 not only has a function of automatically transporting the document 12 to the reading position of the platen glass 11 but also functions as a second image reading unit that reads an image of the other surface (back surface) of the document 12 that is automatically transported.

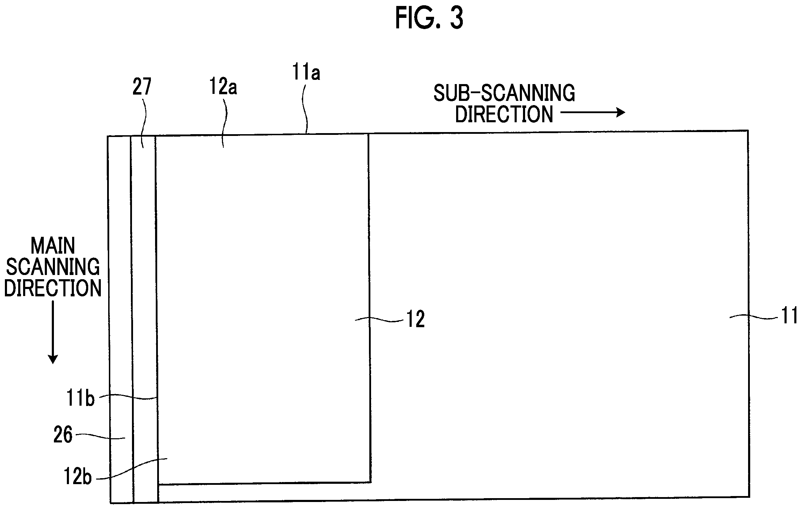

The document reading device main body 13 is configured as a rectangular parallelepiped housing in which an upper end surface is opened over substantially the entire surface except for an outer peripheral end and one end portion (in the drawing, a left end portion) along a width direction. The platen glass 11 on which the document 12 is placed is disposed in an opening portion located on the upper end surface of the document reading device main body 13. As illustrated in Fig. 3, the platen glass 11 employs a so-called side registration method in which the corresponding end edges 12a and 12b of the document 12 are abutted and located with respect to an one end portion 11a (upper end portion in the drawing) along the reading direction (main scanning direction) of the document 12 and an end portion 11b (left end portion in the drawing) on the front side along a direction (sub-scanning direction) intersecting the reading direction of the original document 12. The platen glass 11 is pressed by the automatic document transport device 14 in a state in which the reading surface is placed facing downward to position the document 12 for reading the image. The automatic document transport device 14, which also functions as a document pressing member, presses the document 12 onto the platen glass 11 and includes an elastic layer 15 whose lower end surface facing the platen glass 11 is formed in white, as illustrated in Fig. 2.

As illustrated in Fig. 2, a light source 16, a full-rate mirror 17, two half-rate mirrors 18 and 19, an imaging lens 20, and a reading element 21 are disposed inside the document reading device main body 13. The light source 16 consists of an LED, a halogen lamp, or the like that illuminates the image of the document 12 placed on the platen glass 11. The full-rate mirror 17 reflects the reflected light image from the document 12 toward the reading element 21. The two half-rate mirrors 18 and 19 reflect the reflected light image of the document 12, which is reflected by the full-rate mirror 17, to the reading element 21. The imaging lens 20 forms an image of the reflected light image of the document 12, which is reflected by the half-rate mirrors 18 and 19, on the reading element 21 at a required magnification. The reading element 21 consists of a CCD or the like that reads the reflected light image of the document 12 in full color or monochrome. The light source 16, the full-rate mirror 17, the two half-rate mirrors 18 and 19, the imaging lens 20, and the reading element 21 constitute a first image reading means. The light source 16 and the full-rate mirror 17 are mounted on a first carriage 22. In addition, the half-rate mirrors 18 and 19 are mounted on a second carriage 23.

In a case of reading the image of the document 12 placed on the platen glass 11, the document reading device 3 moves the first carriage 22 and the second carriage 23 at a required speed along the sub-scanning direction to read the image of the entire surface of the document 12 in a full-color or monochrome mode at a required magnification using the reading element 21.

Here, the main scanning direction refers to a direction in which the reading element 21 scans the image information of the document 12 in a case of reading the image of the document 12, that is, an arrangement direction of the reading element 21. The sub-scanning direction refers to a direction intersecting the scanning direction, that is, a direction in which the light source 16, the full-rate mirror 17, and the half-rate mirrors 18 and 19 move.

In addition, as illustrated in Figs. 2 and 3, a first reading unit 26 is provided at an end portion of the platen glass 11 on the front side (left side in the drawing) along the sub-scanning direction. The first reading unit 26 consists of a slit-shaped glass surface that reads the image of one surface (front surface) of the document 12 transported by the automatic document transport device 14. A document guide 27 having a substantially triangular cross section is disposed between the platen glass 11 and the first reading unit 26. The document guide 27 abuts an end portion of the document 12 placed on the platen glass 11 and guides the document 12 that has passed through the first reading unit 26 to an obliquely upper side, which is a downstream side in the transport direction. A side surface of the document guide 27 on the first reading unit 26 side is formed in a curved surface shape that is recessed to smoothly guide the document 12 to the downstream side in the transport direction. A guide roll 27a that guides the document 12 to the first reading unit 26 is rotatably disposed on an upstream side of the first reading unit 26.

In a case of reading the image of the document 12 transported by the automatic document transport device 14, the document reading device 3 stops the first carriage 22 and the second carriage 23 at the positions illustrated in Fig. 2. Then, the image on the front surface, which is one side of the document 12 passing through the first reading unit 26, is illuminated by the light source 16. At the same time, the document reading device 3 forms an image of the reflected light image of the document 12 reflected by the full-rate mirror 17 and the half-rate mirrors 18 and 19 on the reading element 21 using the imaging lens 20 to read the image of the document 12 using the reading element 21.

As illustrated in Fig. 2, the automatic document transport device 14 includes a document tray 28 as an example of a sheet loading unit, an automatic document feeding unit 29, the first reading unit 26, a second reading unit 30, and a discharge tray 31 as an example of a sheet discharge means. The document tray 28 loads the document 12 which is an example of a sheet. The automatic document feeding unit 29 transports the document 12 loaded on the document tray 28 along a document transport path 40 to pass through the first reading unit 26. The first reading unit 26 reads an image of one surface (front surface) of the document 12 transported by the automatic document feeding unit 29. The second reading unit 30 includes a second image reading means for reading an image of the other surface (back surface) of the document 12 transported by the automatic document feeding unit 29. The discharge tray 31 sequentially discharges the loaded documents 12 whose images have been read by the first and second reading units 26 and 30.

The second reading unit 30 is composed of a contact image sensor (CIS) or the like as an example of a second image reading means that is capable of reading an image of the back surface of the document 12 transported along the document transport path 40 at a close position.

The automatic document transport device 14 according to the first exemplary embodiment includes both the first reading unit 26 that reads an image of one surface (front surface) of the document 12 and the second reading unit 30 that reads an image of the other surface (back surface) of the document 12. However, the automatic document transport device 14 is not limited to this, and may include only the first reading unit 26 that reads the image of one surface (front surface) of the document 12. In this case, the automatic document transport device 14 is configured to provide a reversal transport path (not illustrated) in a part of the document transport path 40, and to reverse the front and back of the document 12 using the reversal transport path and transport the document 12 again to the first reading unit 26.

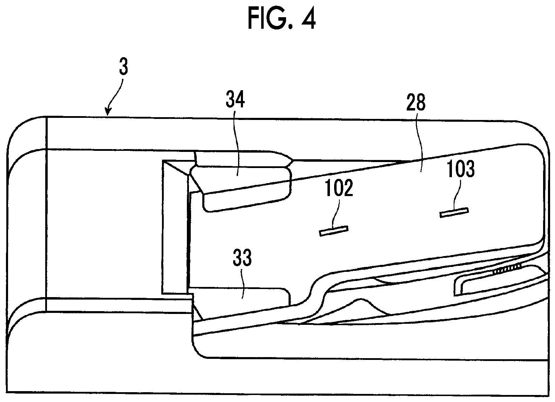

As illustrated in Fig. 4, the document tray 28 is formed in a flat shape that allows the document 12 up to the maximum size of A3 (297 mm × 420 mm) (in the longitudinal direction) to be placed thereon by using an extension tray (not illustrated) that is provided to be pulled out at the rear end side along the transport direction of the document 12, as necessary. The document tray 28 is set to a size that allows, for example, the document 12 with a length of A4 size (210 mm × 297 mm) along the main scanning direction (width direction) intersecting the transport direction of the document 12 to be placed along the direction intersecting the transport direction. The document 12 is placed on the document tray 28 with the reading surface facing upward in a state in which the leading end along the transport direction is abutted against an abutment plate 32 provided in the document tray 28 or the automatic document transport device 14 and aligned.

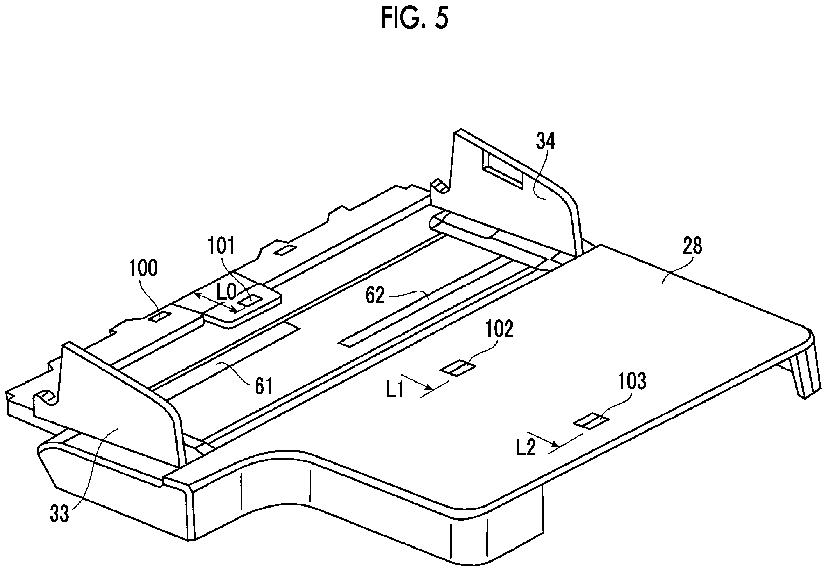

In the first exemplary embodiment, as illustrated in Fig. 5, the document tray 28 includes a presence/absence sensor 100 as an example of a first detection unit that detects the presence or absence of the document 12 at a position slightly shifted from the center along the width direction intersecting the transport direction of the document 12 and at an end portion on the downstream side along the transport direction (sub-scanning direction) of the document 12. The presence/absence sensor 100 consists of a reflective type sensor that emits light onto the document 12 placed on the document tray 28 and detects the presence or absence of the document 12 based on the presence or absence of the reflected light reflected from the document 12. A rectangular opening portion or a transparent plate is provided at a position of the presence/absence sensor 100.

In addition, as illustrated in Fig. 5, the document tray 28 includes a first size sensor 101 as an example of a first detection unit that detects the size of the document 12 at a position separated from the end portion on the downstream side along the transport direction of the document 12 by a short distance, the position being at the center of the document tray 28 along the width direction intersecting the transport direction of the document 12. Similar to the presence/absence sensor 100, the first size sensor 101 consists of a reflective type sensor that emits light onto the document 12 placed on the document tray 28 and detects the presence or absence of the document 12 based on the presence or absence of the reflected light reflected from the document 12.

Further, the document tray 28 includes a second size sensor 102 as an example of a second detection unit that detects the size of the document 12 at a position separated from the end portion on the downstream side along the transport direction of the document 12 by a first distance L1, the position being at the center of the document tray 28 along the width direction intersecting the transport direction of the document 12. Similar to the first size sensor 101, the second size sensor 102 consists of a reflective type sensor that emits light onto the document 12 placed on the document tray 28 and detects the presence or absence of the document 12 based on the presence or absence of the reflected light reflected from the document 12.

In addition, the document tray 28 includes a third size sensor 103 as an example of a second detection unit that detects the size of the document 12 at a position separated from the end portion on the downstream side along the transport direction of the document 12 by a second distance L2 which is longer than the first distance L1, the position being at the center of the document tray 28 along the width direction intersecting the transport direction of the document 12. Similar to the first size sensor 101, the third size sensor 103 consists of a reflective type sensor that emits light onto the document 12 placed on the document tray 28 and detects the presence or absence of the document 12 based on the presence or absence of the reflected light reflected from the document 12.

The first size sensor 101 detects whether or not, for example, a length along the transport direction (sub-scanning direction) in which the size of the document 12 is the minimum size on which an image can be formed by the image forming apparatus 1, is equal to or greater than L0, which is the minimum length. Here, the minimum length L0 is set to a value (approximately 50 mm) close to 55 mm, which is the size of the business card-sized document 12 along the short side direction and smaller than 55 mm by a slight length ΔL, for example. Therefore, in the first size sensor 101, for example, it is detected whether or not the length of the document 12 placed on the document tray 28 is equal to or greater than the length along the short side direction of the business card size.

In addition, the second size sensor 102 detects, for example, whether or not the length of the document 12 along the transport direction (sub-scanning direction) is equal to or greater than L1, which is a first length. Here, the first length L1 is set to a value (approximately 290 mm) close to 297 mm, which is the size of the A4-sized document 12 along the longitudinal direction and smaller than 297 mm by a slight length ΔL, for example. Therefore, in the second size sensor 102, for example, it is detected whether or not the length of the document 12 placed on the document tray 28 is equal to or greater than the length along the short side direction of the A4 size.

Further, the third size sensor 103 detects, for example, whether or not the length of the document 12 along the transport direction (sub-scanning direction) is equal to or greater than L2, which is a second length. Here, the second length L2 is set to a value (approximately 360 mm) close to 364 mm, which is the size of the B4-sized document 12 along the longitudinal direction and smaller than 364 mm by a slight length ΔL, for example. Therefore, in the third size sensor 103, for example, it is detected whether or not the length of the document 12 placed on the document tray 28 is equal to or greater than the length along the longitudinal direction of the B4 size.

In addition, as illustrated in Fig. 5, the document tray 28 includes a pair of side guides 33 and 34 that are aligned in a state in which both end portions are abutted along the main scanning direction (width direction) intersecting the transport direction of the document 12. The document tray 28 employs a so-called center registration method of placing the document 12 based on the center along the main scanning direction intersecting the transport direction of the document 12, unlike the platen glass 11. The side guides 33 and 34 are provided on both sides of the document tray 28 along the main scanning direction. The right and left side guides 33 and 34 are disposed to be movable (interlocked) based on the center along the main scanning direction intersecting the transport direction of the document 12 to abut both ends of the document 12 placed on the document tray 28.

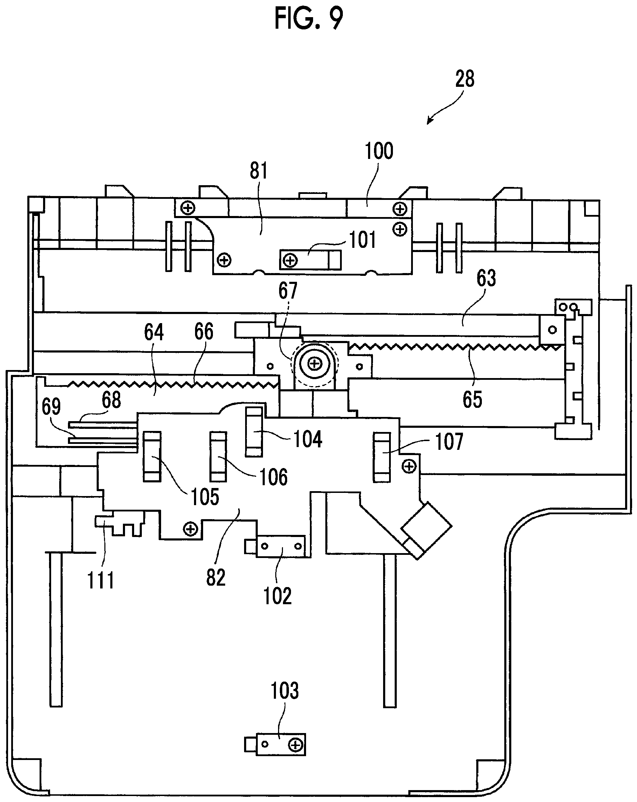

More specifically, the right and left side guides 33 and 34 are attached to be movable to the vicinity of the center along the width direction along two guide grooves 61 and 62 provided in the document tray 28. As illustrated in Fig. 9, right and left rack gear members 63 and 64 that are disposed inside the document tray 28 and that move integrally with the right and left side guides 33 and 34 are mounted on the right and left side guides 33 and 34, respectively. Of the rack gear members 63 and 64, the rack gear member 63 is configured as an elongated rectangular flat plate having a relatively narrow width. In addition, the other rack gear member 64 is configured as an elongated rectangular flat plate that is wider than the rack gear member 63. The rack gear members 63 and 64 include rack gears 65 and 66 on surfaces facing each other, respectively. The rack gear members 63 and 64 are disposed in parallel to each other with a required distance therebetween along the transport direction of the recording paper. The rack gears 65 and 66 of the rack gear members 63 and 64 are engaged with teeth facing in a diameter direction of a pinion gear 67 that is rotatably mounted at the center along a direction intersecting the transport direction of the document tray 28. Therefore, in a case where the one side guide 33 among the right and left side guides 33 and 34 is moved along the width direction, the other side guide 34 is moved along the width direction by the same distance via the rack gears 65 and 66 and the pinion gear 67. As a result, the document 12 placed on the document tray 28 is aligned based on the center along the main scanning direction intersecting the transport direction in a state in which the right and left side guides 33 and 34 abut both ends of the document 12.

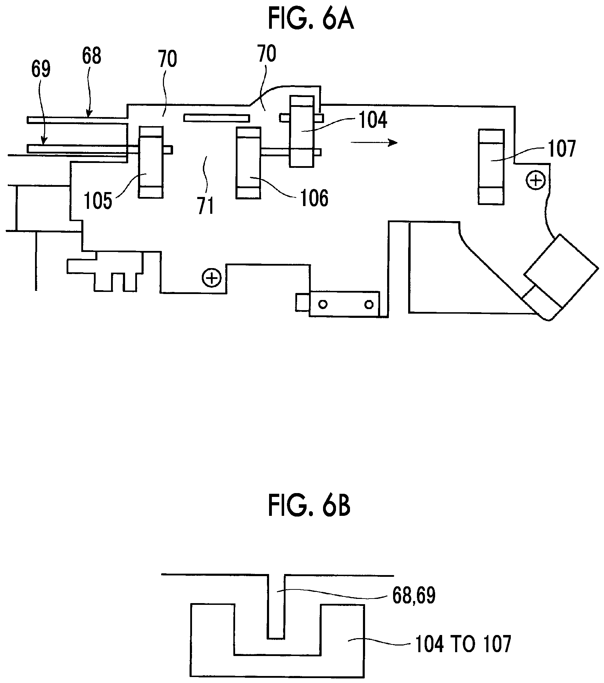

In addition, as illustrated in Figs. 6A and 6B, the rack gear member 64 of one side guide 34 includes first and second actuators 68 and 69. The first and second actuators 68 and 69 are configured as elongated flat plate-shaped projecting portions that are erected on the back surface of the rack gear member 64 along the longitudinal direction, respectively. The first and second actuators 68 and 69 are disposed in parallel to each other along the width direction of the rack gear member 64. In addition, the first and second actuators 68 and 69 include one or a plurality of cutout portions 70 and 71 at a required position along the longitudinal direction of the rack gear member 64.

Inside the document tray 28, fourth to seventh size sensors 104 to 107 as an example of a third detection unit that detects the positions of the right and left side guides 33 and 34, that is, a width of the document 12 by detecting the cutout portions 70 and 71 of the first and second actuators 68 and 69 are provided.

The fourth size sensor 104 is disposed at a position close to the pinion gear 67 inside the document tray 28. The fourth size sensor 104 detects the cutout portion 70 of the first actuator 68. The fifth and sixth size sensors 105 and 106 are disposed outside the fourth size sensor 104 along the width direction of the recording paper. In addition, the seventh size sensor 107 is disposed at a position close to the pinion gear 67 and at a position on a side opposite to the fourth size sensor 104. The fifth to seventh size sensors 105 to 107 detect the cutout portion 71 of the second actuator 69. As the fourth to seventh size sensors 104 to 107, a transmission type sensor that detects the position of the right side guide 34 based on the presence or absence of transmitted light via the cutout portions 70 and 71 of the first and second actuators 68 and 69 is used.

Since the document tray 28 includes the fourth to seventh size sensors 104 to 107, it is possible to detect up to 16 types of sizes along the width direction of the document 12 based on a combination of ON/OFF which are output of the fourth to seventh size sensors 104 to 107.

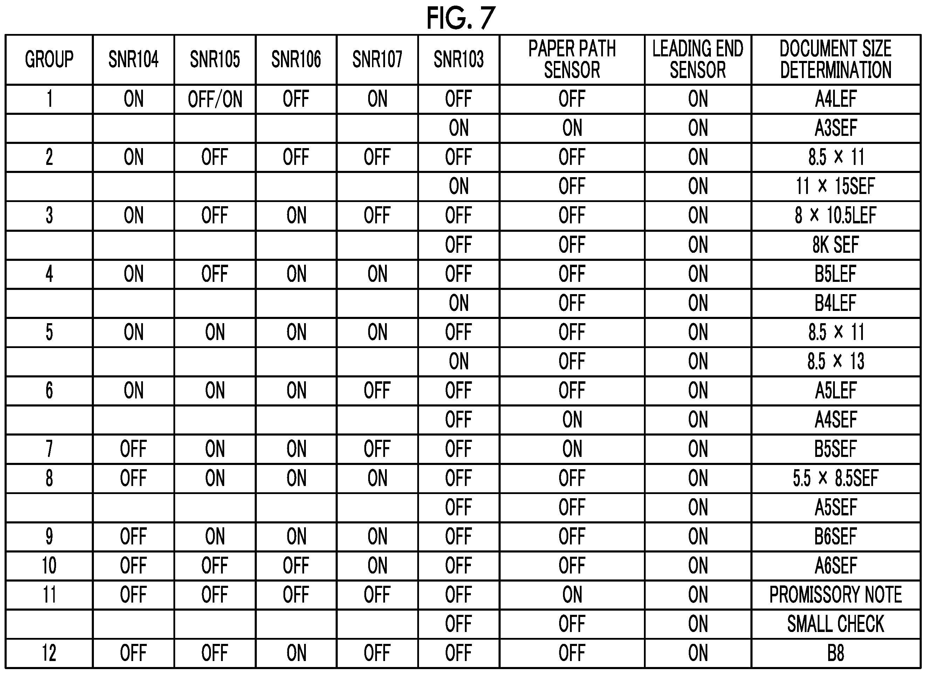

In the first exemplary embodiment, as illustrated in Fig. 7, as a combination (group) of ON/OFF which are output of the fourth to seventh size sensors 104 to 107, 12 types of "ON, OFF/ON, OFF, ON", "ON, OFF, OFF, OFF", "ON, OFF, ON, OFF", "ON, OFF, ON, ON", "ON, ON, ON, ON", "ON, ON, ON, OFF", "OFF, ON, ON, OFF", "OFF, ON, ON, ON", "OFF, ON, ON, ON", "OFF, OFF, OFF, ON", "OFF, OFF, OFF, OFF", and "OFF, OFF, ON, OFF" are employed. Here, "ON, OFF/ON, OFF, ON" of the group 1 means that the output of the fifth size sensor 105 may be either OFF or ON.

Each of the groups 1 to 12 in which the outputs of the fourth to seventh size sensors 104 to 107 are combined has a certain detection width. A detection width of the group 1 is set to W1 ≥ W ≥ W2, a detection width of the group 2 is set to W2 > W ≥ W3, a detection width of the group 3 is set to W3 > W ≥ W4, a detection width of the group 4 is set to W4 > W ≥ W5, a detection width of the group 5 is set to W5 > W ≥ W6, a detection width of the group 6 is set to W6 > W ≥ W7, a detection width of the group 7 is set to W7 > W ≥ W8, a detection width of the group 8 is set to W8 > W ≥ W9, a detection width of the group 9 is set to W9 > W ≥ W10, a detection width of the group 10 is set to W10 > W ≥ W11, a detection width of the group 11 is set to W11 > W ≥ W12, and a detection width of the group 12 is set to W12 > W ≥ W13.

As illustrated in Fig. 2, the automatic document feeding unit 29 includes the document transport path 40 as an example of a sheet transport path for transporting the document 12 loaded on the document tray 28 to the first and second reading units 26 and 30. A nudger roll 41 that feeds the topmost document 12 placed on the document tray 28 and a separating roll pair 42 that separates the documents 12 fed by the nudger roll 41 one by one are disposed at an end portion of the document transport path 40 on the most upstream side, and that is disposed on a downstream side of the nudger roll 41 in the transport direction of the document 12. In a case where the presence/absence sensor 100 detects that the document 12 is placed on the document tray 28, the nudger roll 41 descends to abut the topmost document 12 placed on the document tray 28.

The separating roll pair 42 is composed of a feed roll 43 that transports the document 12 to the downstream side, and a retard roll 44 that is in pressure contact with the feed roll 43 and rotates in a direction opposite to the feed roll 43 or is biased in the opposite direction.

The document transport path 40 of the automatic document transport device 14 is provided with a plurality of transport roll pairs 45 to 49 that transport the document 12 separated one by one by the separating roll pair 42 and transported in a state of sandwiching the document 12, a plurality of guide members 50 to 55 that guide the front and back surfaces of the document 12 transported by the plurality of transport roll pairs 45 to 49, and a discharge roll pair 56 that discharges the document 12 to the discharge tray 31 as an example of a discharge means.

As illustrated in Fig. 2, a paper path sensor 108 as an example of a detection unit that detects the presence or absence of the document 12 transported by the separating roll pair 42 is disposed in the vicinity of a central portion in a direction intersecting the transport direction of the document 12 on the downstream side of the separating roll pair 42 in the document transport direction and on the upstream side of the first transport roll pair 45 in the document transport direction. In addition, as illustrated in Fig. 2, a jam sensor 109 that detects the transport failure of the document 12 is disposed on the downstream side of the transport roll pair 46 in the document transport path 40. Further, a leading end sensor 110 is disposed in the document transport path 40 on the downstream side of the transport roll pair 47 and on the upstream side of the guide roll 27a for securing a storage area for storing data of the document 12 to be read by the reading element 21 by detecting the leading end of the document 12.

As illustrated in Fig. 2, the discharge tray 31 is provided with a flat plate-shaped alignment abutment unit 57 that stands upright at the end portion on the upstream side end of the document 12 along the discharge direction, enabling alignment by abutting the end portion of the document 12. The discharge tray 31 is located below the document tray 28 in the vertical direction, and includes a first inclined portion 58 whose rear end portion along the horizontal direction is inclined upward and a second inclined portion 59 which is located on a downstream side of the first inclined portion 58 and whose rear end portion along the horizontal direction is further inclined upward. The document 12 discharged onto the discharge tray 31 by the discharge roll pair 56 is discharged to the first inclined portion 58 and the second inclined portion 59 of the discharge tray 31 by gravity according to the size of the document 12.

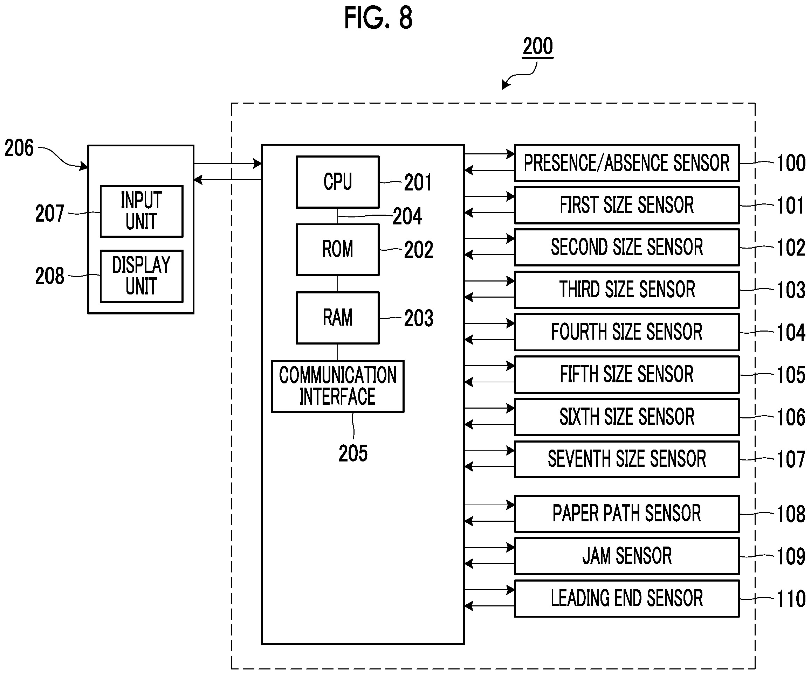

Fig. 8 is a block diagram illustrating a control device of the document reading device 3 according to the first exemplary embodiment.

In Fig. 8, reference numeral 200 indicates the control device that controls the operation of the document reading device 3. The control device 200 includes a central processing unit (CPU) 201 as an example of a control means that controls the operation of the document reading device 3, a read only memory (ROM) 202 that stores a program and the like executed by the CPU 201, a random access memory (RAM) 203 that temporarily stores a parameter and the like used in the program, a bus 204 that connects the CPU 201, the ROM 202, and the like, and a communication interface 205 that communicates with a control device (not illustrated) of the image forming apparatus 1.

Detection signals from the presence/absence sensor 100, the first to seventh size sensors 101 to 107, the paper path sensor 108, the jam sensor 109, and the leading end sensor 110 are input to the CPU 201, respectively. In addition, the CPU 201 determines the size of the document 12 placed on the document tray 28 of the document reading device 3 by referring to a table illustrated in Fig. 7 stored in advance in the ROM 202 based on the detection signals from the presence/absence sensor 100, the first to seventh size sensors 101 to 107, the paper path sensor 108, the jam sensor 109, and the leading end sensor 110.

In addition, reference numeral 206 indicates an operation device that operates the image forming apparatus 1 including the document reading device 3. As illustrated in Fig. 1, the operation device 206 is disposed on a front surface of the document reading device 3 or the like. The operation device 206 includes an input unit 207 that inputs the type of the recording paper 4 on which an image is formed by the image forming apparatus 1, the number of recorded sheets, and the like, and selects and designates a reading mode, such as whether to read an image of only one side (front surface) or an image of both sides in a case where the image of the document is read by the document reading device 3, or whether to read an image of the document in full color or in monochrome, and a display unit 208 that displays the type of the recording paper 4, the number of recorded sheets, and the like input and displays the reading mode of the image of the document.

Incidentally, as illustrated in Fig. 2, in the document reading device 3, the document tray 28, on which the document 12 is placed, includes the plurality of size sensors 101 to 107 that detect the size of the document. As some of the first to third size sensors 101 to 103 among the plurality of size sensors 101 to 107, a reflective type sensor that detects the size of the document 12 by emitting light onto the document 12 placed on the document tray 28 and receiving reflected light from the document 12 is used. In addition, as the fourth to seventh size sensors 104 to 107, a transmissive type sensor that detects the position of the right side guide 34 based on the presence or absence of transmitted light via the cutout portions 70 and 71 of the first and second actuators 68 and 69 provided in the side guide 34 is used.

The document reading device 3 is collected together with the image forming apparatus 1 during recycling. Then, the document reading device 3 is disassembled, various components are taken out, and it is determined whether or not the document reading device 3 can be reused after going through a cleaning step or the like.

The plurality of size sensors 101 to 107 are used in the document reading device 3 as size sensors for detecting the size of the document 12. The size sensors 101 to 107 have different detection methods such as a reflective type sensor and a transmissive type sensor depending on the position to be used and the function.

Therefore, the document reading device 3 in the related art has a technical problem in that, in the recycling, it is necessary to detach and clean the individual size sensors 101 to 107 and to perform an inspection as to whether or not the individual size sensors 101 to 107 can be reused, resulting in cumbersome work.

More specifically, in the document reading device 3, the size of the document 12 from which the image can be read is diversified in response to the needs of the user. In particular, in recent years, the size of the document from which the image can be read by the document reading device 3 has been shifted to a smaller size, for example, a slip of Takkyubin (registered trademark), a promissory note, a small check, a receipt, a boarding pass of an airplane, and the like.

In general, in a case where the size of the document 12 on which the image can be read by the document reading device 3 increases, the number of sensors mounted on the document tray 28 increases accordingly.

Therefore, The document reading device according to the first exemplary embodiment includes a plurality of first detection units that detect the sheet placed on a sheet placing unit, a plurality of second detection units that detect the sheet placed on the sheet placing unit via a detection method different from a detection method of the first detection unit, and a plurality of support units to which the first and second detection units are attached, and is configured to attach two or more detection units having the same detection method among the first and second detection units to the same support unit that is attachable to and detachable from the sheet placing unit.

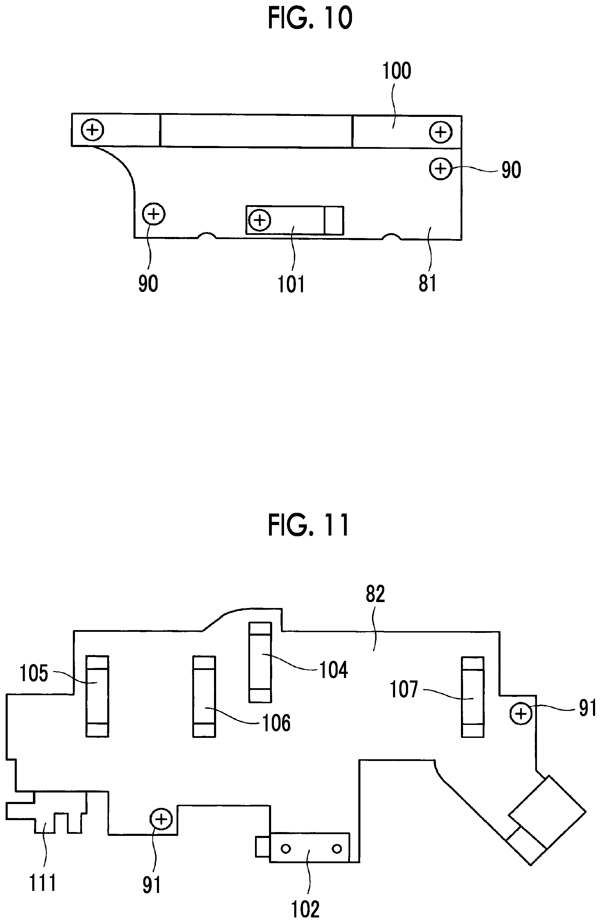

That is, as illustrated in Fig. 9, in the document reading device 3 according to the first exemplary embodiment, among the sensors that detect the presence or absence and the size of the document 12 disposed in the document tray 28, the presence/absence sensor 100 and the first size sensor 101 consisting of the same reflective type sensor, are attached to a first support board 81 as an example of the same first support unit. The first support board 81 consists of a printed wiring board or the like. The first support board 81 is formed in a horizontally elongated planar rectangular shape. As illustrated in Fig. 10, the presence/absence sensor 100 and the first size sensor 101 are attached to the first support board 81 at required positions. The first support board 81 is fixed to an inner surface of the document tray 28 by screws 90.

In addition, as illustrated in Fig. 9, in the document reading device 3, among the sensors that detect the presence or absence and the size of the document 12 disposed in the document tray 28, the fourth to seventh size sensors 104 to 107 consisting of the same transmissive type sensor, are attached to a second support board 82 as an example of the same second support unit. The second support board 82 consists of a printed wiring board or the like. The second support board 82 is formed in a planar irregular shape. As illustrated in Fig. 11, the fourth to seventh size sensors 104 to 107 are attached to the second support board 82 at required positions. The second support board 82 is fixed to the inner surface of the document tray 28 by screwing 91.

In addition, the second size sensor 102 and a position sensor 111 that detects a rotational position of the document tray 28 are attached to the second support board 82. The position sensor 111 is a transmissive type sensor.

As described above, in the document reading device 3 according to the first exemplary embodiment, as illustrated in Fig. 9, the presence/absence sensor 100 and the first size sensor 101 consisting of the same reflective type sensor are attached to the first support board 81.

Therefore, in a case of recycling the document reading device 3, as illustrated in Fig. 10, the first support board 81 to which the presence/absence sensor 100 and the first size sensor 101 are attached may be detached from the document tray 28. In addition, the cleaning step, the inspection step, and the like of the presence/absence sensor 100 and the first size sensor 101 can also be integrally performed in a state in which the presence/absence sensor 100 and the first size sensor 101 are attached to the first support board 81. In particular, the inspection work of the presence/absence sensor 100 and the first size sensor 101 can be easily performed in one inspection step using the same reflective plate or the like, since both sensors 100 and 101 are the same reflective type sensor.

In addition, in the document reading device 3 according to the first exemplary embodiment, as illustrated in Fig. 11, the fourth to seventh size sensors 104 to 107 consisting of the same transmissive type sensor are attached to the same second support board 82. Other second size sensors 102 and the like are attached to the second support board 82, but the cleaning step, the inspection step, and the like of the fourth to seventh size sensors 104 to 107 can be integrally performed, and thus the workability can be improved.

### [Second Exemplary Embodiment]

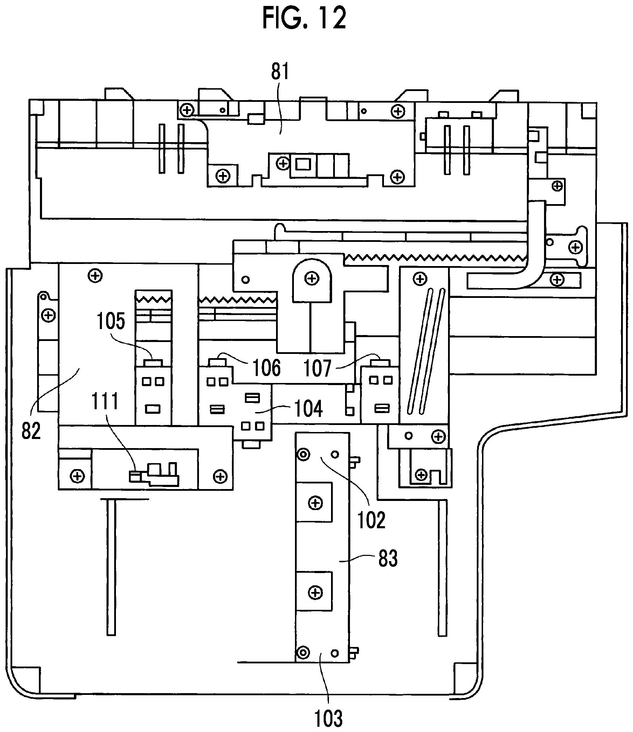

Fig. 12 is a configuration diagram illustrating a document reading device to which the sheet transport device according to the second exemplary embodiment of the present invention is applied.

That is, in the document reading device 3 according to the second exemplary embodiment, as illustrated in Fig. 12, among the sensors that detect the size of the document 12 disposed in the document tray 28, the second and third size sensors 102 and 103 consisting of the same reflective type sensor are attached to the same third support board 83. The third support board 83 consists of a printed wiring board or the like. The third support board 83 is formed in a vertically elongated planar rectangular shape.

As described above, in the document reading device 3 according to the second exemplary embodiment, the second and third size sensors 102 and 103 are attached to the same third support board 83 in addition to the presence/absence sensor 100 and the first size sensor 101.

Therefore, in the document reading device 3 according to the second exemplary embodiment, although the presence/absence sensor 100 and the first size sensor 101 are disposed to be spaced apart from each other, workability during recycling can be improved as compared with a case where the second and third size sensors 102 and 103, which are the same reflective type size sensors, are individually attached to the document tray 28.

Since other configurations and operations are similar to the configurations and operations in the first exemplary embodiment described above, description thereof will be omitted.

### [Third Exemplary Embodiment]

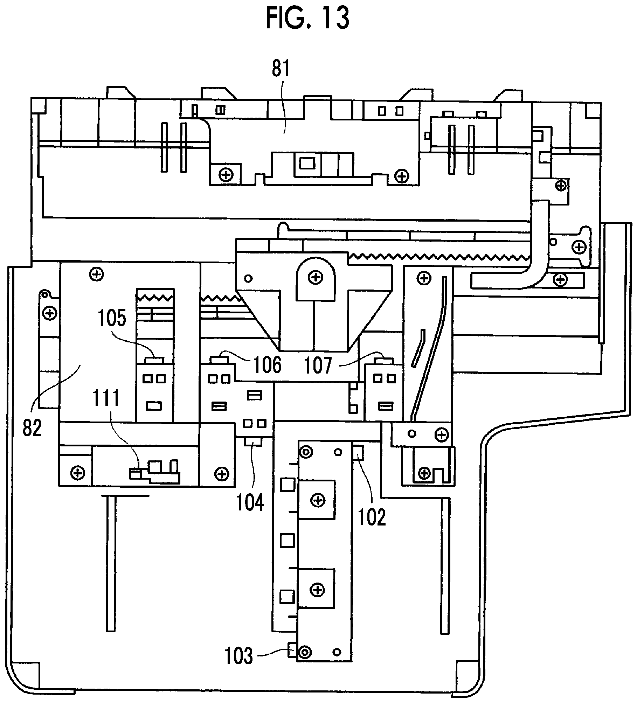

Fig. 13 is a configuration diagram illustrating a document reading device to which the sheet transport device according to the third exemplary embodiment of the present invention is applied.

That is, as illustrated in Fig. 13, in the document reading device 3 according to the third exemplary embodiment, the second and third size sensors 102 and 103 that are disposed at positions relatively close to each other among the sensors that detect the size of the document 12 disposed in the document tray 28 and have different detection methods are configured to be attached to the second support board 82 that is the same support board as the fourth to seventh size sensors 104 to 107.

In the case of the document reading device 3 according to the third exemplary embodiment, by attaching the fourth to seventh size sensors 104 to 107, which are transmissive type sensors, and the second and third size sensors 102 and 103, which are reflective type sensors having different detection methods, to the same second support board 82, the number of support boards can be reduced as compared with the second exemplary embodiment, and the number of components can be reduced and the workability can be improved.

In addition, in the document reading device 3 according to the third exemplary embodiment, although the detection methods are different, the fourth to seventh size sensors 104 to 107 are disposed close to each other, and similarly, the second and third size sensors 102 and 103 are also disposed close to each other. Therefore, during the recycling of the document reading device 3, the second and third size sensors 102 and 103 and the fourth to seventh size sensors 104 to 107 can be detached from the document tray 28 by the same second support board 82.

In addition, the cleaning work, the detection work, and the like of the second and third size sensors 102 and 103 and the fourth to seventh size sensors 104 to 107 can be performed separately by the second and third size sensors 102 and 103 that are attached to the same second support board 82 and are disposed close to each other and by the fourth to seventh size sensors 104 to 107 that are attached to the same second support board 82 and are disposed close to each other. Therefore, it is possible to improve the total workability as compared with a case where the second and third size sensors 102 and 103 are attached to different support boards.

Since other configurations and operations are similar to the configurations and operations in the first exemplary embodiment described above, description thereof will be omitted.

### (Supplementary Note)

(((1))) A sheet transport device comprising:
   a sheet placing unit on which a sheet to be transported is placed;
   a plurality of first detection units that detect the sheet placed on the sheet placing unit;
   a second detection unit that detects the sheet placed on the sheet placing unit via a detection method different from a detection method of the first detection unit; and
   a plurality of support units to which the first and second detection units are attached,
   wherein the plurality of first detection units are attached to the same support unit that is attachable to and detachable from the sheet placing unit.
(((2))) The sheet transport device according to (((1))),
   wherein the plurality of first detection units are reflective type detection units disposed adjacent to each other on a downstream side along a transport direction of the sheet.
(((3))) The sheet transport device according to (((2))),
   wherein the plurality of first detection units consist of a detection unit disposed at an end portion on the downstream side along the transport direction of the sheet and at a position shifted in a width direction intersecting the transport direction of the sheet from a center along the width direction, and a detection unit disposed on an upstream side of the end portion on the downstream side along the transport direction of the sheet and at the center along the width direction intersecting the transport direction of the sheet.
(((4))) The sheet transport device according to (((3))),
   wherein the plurality of first detection units are attached to the same first support unit.
(((5))) The sheet transport device according to (((1))),
   wherein the second detection unit is a transmissive type detection unit that detects a size of the sheet along a width direction intersecting a transport direction of the sheet.
(((6))) The sheet transport device according to (((5))),
   wherein the second detection unit detects a position of a side guide that abuts an end portion in the width direction intersecting the transport direction of the sheet placed on the sheet placing unit by combining detection results of the second detection unit.
(((7))) The sheet transport device according to (((6))),
   wherein the second detection unit is attached to the same second support unit.
(((8))) A sheet reading device comprising:
   the sheet transport device according to any one of (((1))) to (((7))); and
   a reading unit that reads information on a sheet transported by the sheet transport device.
(((9))) An image forming apparatus comprising:
   the sheet reading device according to (((8))); and
   an image forming unit that forms information on a sheet read by the sheet reading device as an image on a recording medium.

With the sheet transport device according to (((1))), it is possible to improve recyclability of the sheet transport device as compared with a case where a plurality of detection units having different detection methods mounted on the sheet transport device are attached to the same support unit without considering the detection method.

With the sheet transport device according to (((2))), the plurality of first detection units are easily disposed adjacent to each other on the downstream side along the transport direction of the sheet as compared with a case where the plurality of first detection units consist of transmission (light shielding) type detection units.

With the sheet transport device according to (((3))), it is possible to detect even a sheet having a size that is extremely small as compared with a case where the plurality of first detection units consist of only the detection units that are disposed at the end portion on the downstream side along the transport direction of the sheet and at the position shifted in the width direction intersecting the transport direction of the sheet from the center along the width direction.

With the sheet transport device according to (((4))), the plurality of first detection units facilitates inspections or the like during recycling, as compared with a case where the plurality of first detection units are attached to different support units.

With the sheet transport device according to (((5))), the second detection unit is capable of detecting a wide variety of sheet sizes with a small number of detection units, as compared with a case where the second detection unit consists of a reflective type detection unit that detects the sheet itself.

With the sheet transport device according to (((6))), the second detection unit is capable of detecting the position of the side guide with higher accuracy than in a case where the second detection unit consists of a reflective type detection unit that detects the position of the side guide.

With the sheet transport device according to (((7))), the second detection unit facilitates inspections or the like during recycling, as compared with a case where the second detection unit is attached to different support units.

With the sheet reading device according to (((8))), recyclability of the sheet reading device is improved as compared with a case where the sheet transport device according to any one of (((1))) to (((7))) is not provided.

With the image forming apparatus according to (((9))), recyclability of the image forming apparatus is improved as compared with a case where the sheet reading device according to (((8))) is not provided.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: image forming apparatus
2: apparatus main body
12: document
28: document tray
81: first support board
82: second support board
100: presence/absence sensor
101: first size sensor
102: second size sensor
103: third size sensor

## Claims

1. A sheet transport device comprising:
a sheet placing unit on which a sheet to be transported is placed;
a plurality of first detection units that detect the sheet placed on the sheet placing unit;
a second detection unit that detects the sheet placed on the sheet placing unit via a detection method different from a detection method of the first detection unit; and
a plurality of support units to which the first and second detection units are attached,
wherein the plurality of first detection units are attached to the same support unit that is attachable to and detachable from the sheet placing unit.

2. The sheet transport device according to claim 1,
wherein the plurality of first detection units are reflective type detection units disposed adjacent to each other on a downstream side along a transport direction of the sheet.

3. The sheet transport device according to claim 2,
wherein the plurality of first detection units consist of a detection unit disposed at an end portion on the downstream side along the transport direction of the sheet and at a position shifted in a width direction intersecting the transport direction of the sheet from a center along the width direction, and a detection unit disposed on an upstream side of the end portion on the downstream side along the transport direction of the sheet and at the center along the width direction intersecting the transport direction of the sheet.

4. The sheet transport device according to claim 3,
wherein the plurality of first detection units are attached to the same first support unit.

5. The sheet transport device according to claim 1,
wherein the second detection unit is a transmissive type detection unit that detects a size of the sheet along a width direction intersecting a transport direction of the sheet.

6. The sheet transport device according to claim 5,
wherein the second detection unit detects a position of a side guide that abuts an end portion in the width direction intersecting the transport direction of the sheet placed on the sheet placing unit by combining detection results of the second detection unit.

7. The sheet transport device according to claim 6,
wherein the second detection unit is attached to the same second support unit.

8. A sheet reading device comprising:
the sheet transport device according to any one of claims 1 to 7; and
a reading unit that reads information on a sheet transported by the sheet transport device.

9. An image forming apparatus comprising:
the sheet reading device according to claim 8; and
an image forming unit that forms information on a sheet read by the sheet reading device as an image on a recording medium.
